# EUROPEAN PATENT APPLICATION

(11) **EP 4 418 385 A2**
(43) Date of publication of application: **21.08.2024**
(21) Application number: 23219570.1
(22) Date of filing: 21.12.2023
(51) Int. Cl.: H01M 10/04, H01M 4/133, H01M 4/134, H01M 4/1391, H01M 4/1393, H01M 4/1395

(54) **NEGATIVE ELECTRODE FOR LITHIUM SECONDARY BATTERY WITH IMPROVED RAPID CHARGING PERFORMANCE AND METHOD AND APPARATUS FOR PREPARING THE SAME**

(30) Priority: 20.02.2023 KR 20230022121
(71) Applicant: SK On Co., Ltd., Seoul 03161 (KR)
(72) Inventor: KIM, In Ha, 34124 Daejeon (KR); PARK, Sung Jun, 34124 Daejeon (KR); JO, Byoung Wook, 34124 Daejeon (KR); JO, Yeong Min, 34124 Daejeon (KR)
(74) Representative: Stolmár & Partner Patentanwälte PartG mbB

(57) **Abstract**

A negative electrode, and a method and apparatus for manufacturing a negative electrode, are provided. The apparatus for manufacturing a negative electrode includes a pair of magnet plates including an upper magnet plate and a lower magnet plate respectively disposed above and below a plane (e.g., X-Y plane) in which the negative electrode moves in a direction (e.g., X-axis direction). In the magnet plate, first and second vertical unit magnets and first and second horizontal unit magnets with magnetic force lines having different directions are arranged, and a direction of magnetic force lines of the unit magnets changes by 90 degrees in a second direction (e.g., Y-axis direction) . The upper and lower magnet plates have opposite polarities, and the upper and lower magnet plates have constant magnetic force in the first direction and a magnetic force changing in the second direction.

## Description

### TECHNICAL FIELD

The technology and implementations disclosed in this patent document generally relate to a negative electrode, a method and an apparatus for manufacturing the same.

### BACKGROUND

An electrode is an electrical conductor used to make contact with a nonmetallic part of a circuit such as an electrolyte. Electrodes are essential parts of batteries that can consist of a variety of materials depending on the type of battery.

### SUMMARY

The disclosed technology may be implemented in some embodiments to provide a negative electrode that can improve the battery performance by securing sufficient vertical orientation of a negative electrode active material in a relatively short period of time, and a method and apparatus for manufacturing the negative electrode.

The disclosed technology may be implemented in some embodiments to provide a method of manufacturing a negative electrode using the apparatus for manufacturing a negative electrode described above.

The disclosed technology may be implemented in some embodiments to provide a negative electrode that includes a negative electrode active material oriented in a vertical direction with respect to a negative electrode current collector, while reducing, minimizing, or preventing separation between a negative electrode current collector and a negative electrode mixture layer.

When a degree of orientation of a negative electrode is improved, a curl of an electrode becomes severe, and as the graphite repeats contraction and expansion during a charging and discharging process, adhesion between a negative electrode current collector and a negative electrode mixture layer may not be maintained and separation therebetween may occur. The disclosed technology can be implemented in some embodiments to provide a negative electrode that can suppress occurrence of such separation.

In some embodiments of the disclosed technology, an apparatus for manufacturing a negative electrode includes a pair of magnet plates with an upper magnet plate and a lower magnet plate disposed above and below a plane (e.g., X-Y plane) in which the negative electrode travels in a first direction (e.g., X-axis direction). In the magnet plate, first and second vertical unit magnets and first and second horizontal unit magnets with magnetic force lines having different directions are arranged, and a direction of magnetic force lines of the unit magnets changes by 90 degrees in a second direction (e.g., Y-axis direction) . The upper magnet plate and the lower magnet plate have magnets of opposite polarity facing each other. The upper magnet plate and the lower magnet plate have constant magnetic force in the X-axis direction and a magnetic force changing in the Y-axis direction.

A length (e.g., LY1) of the vertical unit magnet in the Y-axis direction and a length (e.g., LY2) of the horizontal unit magnet in the Y-axis direction may be the same or different.

A ratio (e.g., LY2/LY1) of a length (e.g., LY2) of the horizontal unit magnet in the Y-axis direction to a length (e.g., LY1) of the vertical unit magnet in the Y-axis direction may be greater than 0.5 and less than 2.67.

A length (e.g., LX1) of the vertical unit magnet in the X-axis direction and the length (e.g., LX2) of the horizontal unit magnet in the X-axis direction may be the same or different.

The magnet plate may include unit magnet rows of two or more in which at least one unit magnet is arranged parallel to an X-axis, and the unit magnet rows may have at least one unit magnet.

One of the unit magnet rows may include two or more unit magnets of which magnetic force lines have the same direction.

One of the unit magnet rows may include two or more unit magnets having the same cross-sectional shape.

The two or more unit magnets included in the unit magnet rows may have the same or different lengths in the X-axis direction.

A thickness of the vertical unit magnet and a thickness of the horizontal unit magnet may be the same or different from each other.

The upper magnet plate and the lower magnet plate may have surfaces facing each other and being parallel planes.

A maximum value of magnetic force in the Y-axis direction may be 7,000G or more.

In some embodiments of the disclosed technology, a method of manufacturing a negative electrode includes applying a negative electrode mixture containing a negative electrode active material to at least one surface of a negative electrode current collector; and a magnetic field application operation of driving the negative electrode current collector coated with the negative electrode mixture, between the upper magnet plate and the lower magnet plate under application of a magnetic field. The magnetic field is applied by the apparatus for manufacturing a negative electrode described above.

The method of manufacturing a negative electrode may further include drying the negative electrode mixture, wherein the drying is performed during or after the magnetic field application operation.

The magnetic field may be applied in a direction perpendicular to the negative electrode current collector.

The magnetic field may have constant magnetic force and magnetic force line direction in an X-axis direction.

The magnetic field may repeat increases and decreases in magnetic force in a Y-axis direction.

The magnetic field may have a sine wave in magnetic force depending on a position in the Y-axis direction.

The magnetic field may be applied for 1 second or more.

The negative electrode mixture slurry may have a viscosity of 150,000 cp or less (measured at 25°C and a shear rate of 0.1s⁻¹.

In some embodiments of the disclosed technology, a negative electrode includes a negative electrode current collector having an X-Y plane and a negative electrode mixture layer containing a negative electrode active material on at least one surface of the negative electrode current collector. In the negative electrode mixture layer, an orientation of the negative electrode active material in an X-axis direction and an orientation of the negative electrode active material in a Y-axis direction are different from each other, and an increase and a decrease in the orientation of the negative electrode active material in the Y-axis direction are periodically repeated.

The negative electrode may have a black-and-white degree value of 63.18 to 63.42.

The negative electrode may have a PO value of 0.29 to 0.37.

### BRIEF DESCRIPTION OF DRAWINGS

Certain aspects, features, and advantages of the disclosed technology are illustrated by the following detailed description with reference to the accompanying drawings.

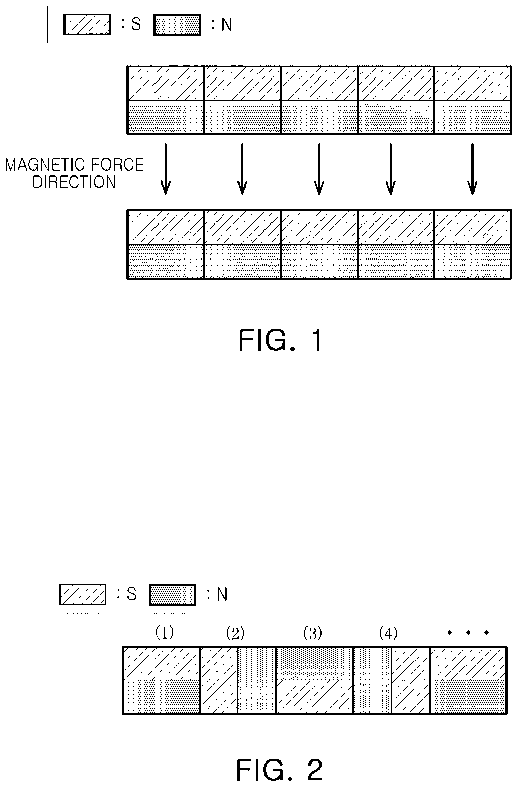

FIG. 1 is a diagram schematically illustrating a magnet module that includes magnet plates for applying a magnetic field between top and bottom. FIG. 1 shows an example of magnet plates in which identical unit magnets are arranged in a row.
FIG. 2 is a diagram schematically illustrating a magnet plate that includes vertical unit magnets and horizontal unit magnets are arranged based on some embodiments of the disclosed technology. In some implementations, the direction of the magnetic force line rotates 90 degrees counterclockwise.

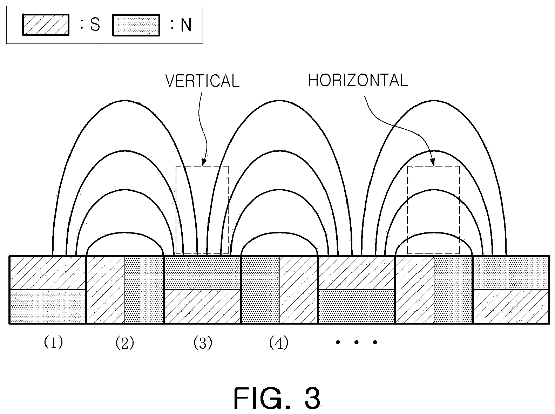

FIG. 3 is a diagram conceptually illustrating changes in magnetic force and direction of magnetic force lines when a magnet plate having the magnet arrangement illustrated in FIG. 2 is disposed on only one surface.

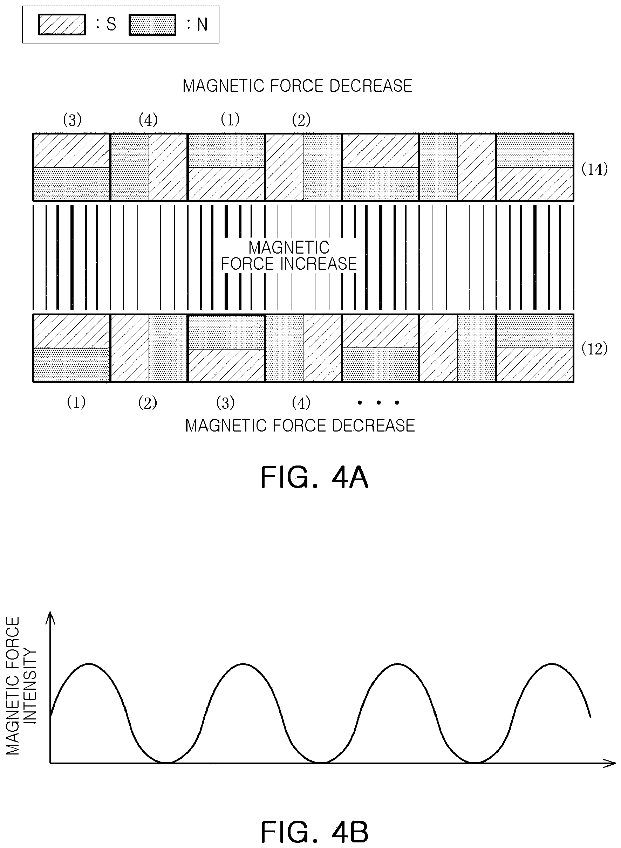

FIG. 4A is a diagram schematically illustrating a magnet module that includes a magnet plate having a magnet arrangement as illustrated in FIG. 2 is disposed on each of both sides of a negative electrode traveling plane, and magnetic force and magnetic force line direction of a magnetic field generated. FIG. 4B is a diagram schematically illustrating a change in magnetic force according to an arrangement position of a magnet plate.

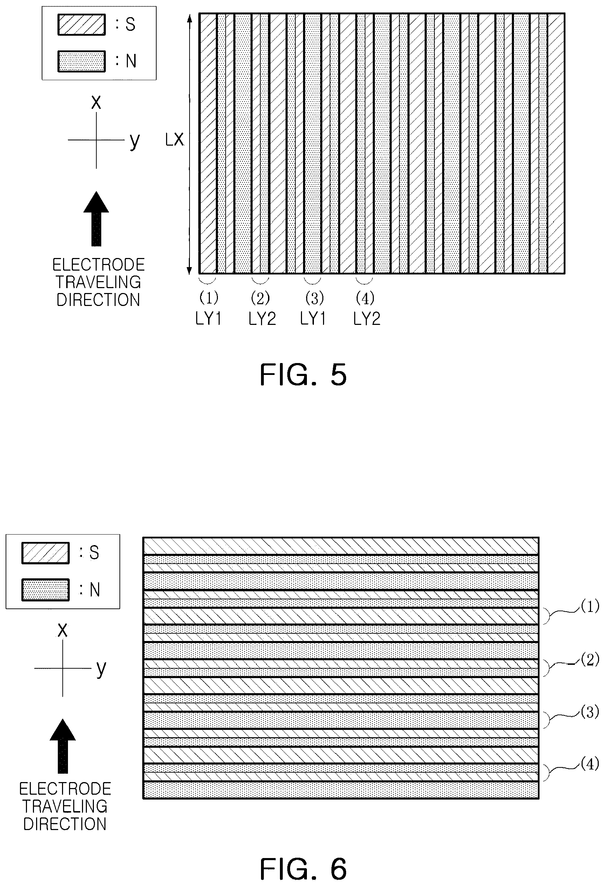

FIG. 5 is a diagram schematically illustrating one of magnet plates disposed on both the upper and lower sides of an X-Y plane in which a negative electrode travels in the X-axis direction. The magnet plate forms a magnetic field whose magnetic force changes periodically by arranging the vertical unit magnet and the horizontal unit magnet so that the direction of the magnetic force line changes clockwise by 90 degrees in the Y-axis direction.
FIG. 6 is a diagram schematically illustrating one of the magnet plates disposed on both upper and lower sides of the X-Y plane in which the negative electrode travels in the X-axis direction. The magnet plate forms a magnetic field whose magnetic force changes periodically in the X-axis direction by disposing the vertical unit magnet and horizontal unit magnet so that the direction of the magnetic force line changes in the X-axis direction by 90-degrees.

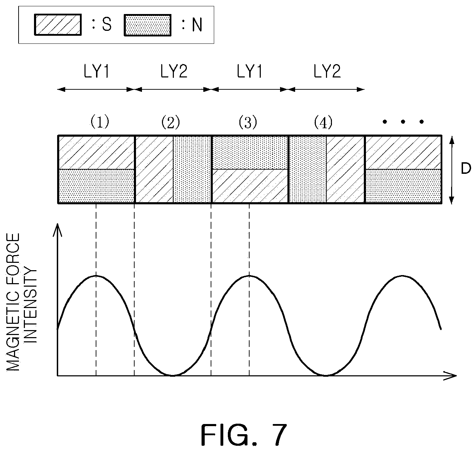

FIG. 7 is a diagram schematically illustrating the relationship between changes in magnetic force according to changes in a vertical length of vertical unit magnets and horizontal unit magnets in a magnet plate having the unit magnet arrangement of FIG. 2, based on some embodiments of the disclosed technology.

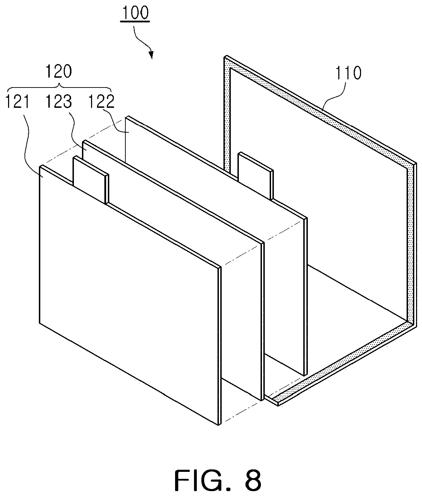

FIG. 8 schematically shows a secondary battery of one embodiment.

### DETAILED DESCRIPTION

Section headings are used in the present document only for ease of understanding and do not limit scope of the embodiments to the section in which they are described.

Features of the disclosed technology disclosed in this patent document are described by example embodiments with reference to the accompanying drawings.

A negative electrode for a secondary battery may be manufactured by applying a negative electrode mixture slurry containing a negative electrode active material, a conductive material, a binder, and a solvent to a negative electrode current collector and then drying and rolling the negative electrode current collector.

In this process, the negative electrode active material having an anisotropic structure is mainly oriented in a horizontal direction parallel to the negative electrode current collector, and most of pores formed between negative electrode active materials are also oriented in the horizontal direction. As the negative electrode active material and the pores are oriented in the horizontal direction in this manner, lithium ions may move through the pores oriented in the horizontal direction during the process of charging or discharging a secondary battery.

With the recent increase in demand for high-performance, long-term-use secondary batteries, there is a trend toward increasing the battery capacity by increasing loading of negative electrodes.

In addition, when the pores in the negative electrode are oriented in the horizontal direction, a movement distance of lithium ions significantly increases and the loading of the negative electrode also increases, causing an increase in resistance during a charging process and increasing charging and discharging time.

In some implementations, in the case of charging or discharging at a high C-rate (e.g., the measurement of current in which a battery is charged and discharged at), lithium salts precipitate on the surface of a negative electrode (Li-plating) may reduce the battery capacity as charge and discharge cycles are repeated and thus may cause battery safety issues.

In some implementations, graphite used as a negative electrode active material may have a spherical shape with a certain degree of anisotropy, and when graphite is oriented in a direction perpendicular to a current collector, as diffusion of lithium ions into a negative electrode is improved, resistance is reduced, and the rapid charging performance of the battery may be improved.

As a method to modify the orientation of graphite and a diamagnetic material, a magnetic field in a direction perpendicular may be applied to a negative electrode current collector using a permanent magnet immediately before drying negative electrode slurry coated on the negative electrode current collector. Here, as the magnetic force of the magnetic field increases, the vertical orientation of the negative electrode active material and pores may be secured within the same magnetic field application time.

In general, permanent magnets may be used to apply a magnetic field, but in some implementations, a magnetic field may be applied using a magnet plate in which individual magnets are arranged in a row. For example, as shown in FIG. 1, a magnet plate having a typical magnet arrangement may be used to apply a magnetic field. However, when using a magnet module using a magnet plate with permanent magnets arranged as illustrated in FIG. 1, a magnetic force may be up to about 4,000G (Gauss).

In some implementations, the productivity of negative electrodes may be improved by improving the speed of coating and drying processes of the negative electrode mixture slurry on the negative electrode current collector. Therefore, the application time of a magnetic field during a negative electrode manufacturing process may be limited to a few seconds. However, the magnetic force of the magnetic field created by magnet plates illustrated in FIG. 1 may be relatively small, and thus, it may be difficult to secure sufficient orientation of the negative electrode within a short period of time.

The disclosed technology can be implemented in some embodiments to provide a negative electrode that may improve the orientation of the negative electrode by increasing magnetic force.

In some implementations, to improve battery performance by shortening the movement path of lithium ions, a negative electrode may be formed by: applying a magnetic field using a permanent magnet; applying a negative electrode mixture slurry on a negative electrode current collector; and then moving the same into the magnetic field.

For example, a magnetic field may be applied using a neodymium (Nd) permanent magnet including N and S poles as a unit magnet.

In some implementations, to significantly increase the magnetic force of the magnetic field, a negative electrode may include a magnet plate in which unit magnets are arranged may be used. In one example, the direction of N and S poles of each unit magnet, for example, the direction of a magnetic force line, rotates at a constant 90 degrees clockwise or counterclockwise.

For example, a magnetic field may be applied using a neodymium (Nd) permanent magnet including N and S poles as a unit magnet.

In some implementations, to significantly increase the magnetic force of the magnetic field, a negative electrode may include a magnet plate in which the unit magnets are arranged may be used. In one example, the direction of the N and S poles of each unit magnet, for example, the direction of the magnetic force line, rotates at a constant 90 degrees clockwise or counterclockwise.

For example, the magnet plate may be a magnet plate having an arrangement of unit magnets as illustrated in FIG. 2. In some implementations, as illustrated in FIG. 2, the magnet plate may be formed by sequentially arranging a vertical unit magnet 1 with magnetic force lines facing upward, a horizontal unit magnet 2 with magnetic force lines facing left, a vertical unit magnet 3 with magnetic force lines facing downward, and a horizontal unit magnet 4 with magnetic force lines facing right so that the direction of the magnetic force lines changes counterclockwise.

On the other hand, as the direction of the magnetic force lines is formed vertically and horizontally by the magnet plate in which the unit magnets as illustrated in FIG. 2 are arranged, a magnetic field having the magnetic force and magnetic force line direction as illustrated in FIG. 3 may be formed. Therefore, as illustrated in FIG. 2, a magnet plate in which the vertical unit magnets 1 and 3 and the horizontal unit magnets 2 and 4 are arranged so that the direction of the magnetic force lines rotates counterclockwise by 90 degrees may be used.

For example, a magnetic force of up to 4, 000 G may be generated by a magnet plate having a general arrangement as illustrated in FIG. 1, but by using a magnet plate in which the direction of magnetic force rotates by 90 degrees as illustrated in FIG. 2, the magnitude of the magnetic force changes at regular intervals as illustrated in FIG. 3, but a relatively greater magnetic force equivalent to 8,000G may be generated. The negative electrode active material may also be oriented by a magnet plate having the unit magnet arrangement of FIG. 1, but when the negative electrode is moved into the magnetic field area by the magnet plate having the magnet arrangement illustrated in FIG. 2, the orientation of the negative electrode active material in the negative electrode mixture layer may be further improved by relatively higher magnetic force.

When using a magnet plate with a magnet arrangement as illustrated in FIG. 2, horizontal magnetic force lines exist as illustrated in FIG. 3, and if a negative electrode is moved into a magnetic field area having such horizontal magnetic force lines, since the horizontal magnetic force lines have a detrimental effect on the orientation of the negative electrode active material, there may be a certain limit to increasing the orientation of the negative electrode.

However, when the magnet plate having the above-mentioned magnet arrangement is disposed on both the upper and lower sides of the movement path along which the negative electrode travels, the magnetic force lines in the horizontal direction as described above may be removed, thereby causing only the magnetic force lines in the vertical direction to be present and thus further improving the orientation of the negative electrode active material. This is schematically illustrated in FIG. 4A.

As illustrated in FIG. 4A, a pair of upper and lower magnet plates 12 and 14 arranged such that the direction of the magnetic force lines is rotated clockwise by 90 degrees using the vertical unit magnets 1 and 3 and the horizontal unit magnets 2 and 4 having magnetic force lines in the vertical or horizontal direction may be disposed on both the upper and lower sides of a traveling path of the negative electrode. In this case, the upper and lower magnet plates 12 and 14 may be disposed such that magnets of opposite polarity face each other.

For example, as illustrated in FIG. 4A, among the unit magnets disposed on the lower magnet plate 12, when a vertical unit magnet (for example, the vertical unit magnet 1) of which a polarity is S-pole on the side facing a negative electrode traveling surface is disposed, a vertical unit magnet (for example, the vertical unit magnet 3) of which a polarity is N pole on the side facing the negative electrode traveling surface may be disposed on the upper magnet plate 14 on the side facing the vertical unit magnet 1.

Likewise, as illustrated in FIG. 4A, regarding the horizontal unit magnet 2, vertical unit magnet 3 and horizontal unit magnet 4 disposed on the lower magnet plate 12, a horizontal unit magnet 4, a vertical unit magnet 1, and a horizontal unit magnet 2 may be disposed on the upper magnet plate 14 facing the lower magnet plate 12, respectively.

By disposing a pair of upper and lower magnet plates 12 and 14 as illustrated in FIG. 4A on both upper and lower sides of the negative electrode traveling surface, the magnetic force may be reduced outside the traveling surface, for example, on the lower surface of the lower magnet plate 12 and the upper surface of the upper magnet plate 14, and the magnetic force may increase on the traveling surface on which the negative electrode travels, for example, between the upper and lower magnet plates 12 and 14, and thus, the orientation of the negative electrode may be improved.

Additionally, as schematically illustrated in FIGS. FIGS. 4A and 4B, the magnetic force changes periodically by repeating increases and decreases. In some implementations, in FIG. FIG. 4A, the magnetic force between the upper and lower magnet plates 12 and 14 is indicated by the thickness of the solid line, and the magnetic force increases and decreases repeatedly, and the change in magnetic force according to the arrangement position of the magnet plates is illustrated in FIG. 4B.

On the other hand, as can be seen from FIGS. FIGS. 4A and 4B, the increases and decreases in the magnetic force periodically repeat, but the horizontal magnetic force lines are removed from an area between the upper and lower magnet plates 12 and 14, and the vertical magnetic force lines are active. Therefore, the magnetic field applied based on an embodiment of the disclosed technology is applied in a direction perpendicular to the negative electrode current collector.

In some embodiments of the disclosed technology, as described above, a pair of magnet plates are disposed so that the direction of the magnetic force line rotates clockwise or counterclockwise by 90 degrees using vertical unit magnets and horizontal unit magnets on both the upper and lower sides of the negative electrode traveling surface, and by moving the negative electrode while applying a magnetic field, a negative electrode in which the negative electrode active material in the negative electrode mixture layer is oriented perpendicular to the negative electrode current collector may be manufactured.

In some embodiments of the disclosed technology, when the traveling direction in which the negative electrode extends is referred to as the X-axis direction and the plane along which the negative electrode travels is referred to as the X-Y plane, an apparatus for manufacturing a negative electrode is provided in which a magnet plate formed by vertical and horizontal unit magnets arranged above and below the X-Y plane in the Y-axis direction. In some implementations, the term "traveling direction" of an electrode may be used to indicate the direction in which the electrode extends.

In some implementations, the magnet plate may include first and second vertical unit magnets and first and second horizontal unit magnets whose magnetic force lines have different directions. For example, the vertical unit magnet may include a first vertical unit magnet with upward magnetic force lines and a second vertical unit magnet with downward magnetic force lines, and the horizontal unit magnet may include a first horizontal unit magnet with leftward magnetic force lines and a second horizontal unit magnet with rightward magnetic force lines.

In some implementations, the first and second vertical unit magnets and the first and second horizontal unit magnets may be arranged so that the direction of the magnetic force lines changes clockwise or counterclockwise at 90 degrees in the Y-axis direction.

The arrangement pattern in which respective unit magnets are arranged is not particularly limited, and may include an arrangement pattern (1-2-3-4) including a first vertical unit magnet-a first horizontal unit magnet-a second vertical unit magnet-a second horizontal unit magnet as illustrated in FIG. 2, and may include an arrangement pattern (1-4-3-2) including the first vertical unit magnet-the second horizontal unit magnet-the second vertical unit magnet-the first horizontal unit magnet as illustrated in FIG. 5.

The upper magnet plate and the lower magnet plate may be disposed such that magnets of opposite polarity face each other. By arranging a pair of magnet plates above and below the negative electrode traveling surface, the magnetic force may be constant in the X-axis direction along which the negative electrode travels, and the magnetic force may be changed in the Y-axis direction.

The apparatus for manufacturing a negative electrode based on an embodiment of the disclosed technology may include a magnet plate having a unit magnet arrangement as illustrated in FIG. 5. FIG. 5 is an example of a magnet plate based on an embodiment, which may be an upper magnet plate or a lower magnet plate.

The magnet plate illustrated in FIG. 5 has a magnetic field applied by the same unit magnet in the X-axis direction, which is the traveling direction of the negative electrode. Therefore, in the X-axis direction, which is the traveling direction of the negative electrode, the magnetic force and direction of magnetic force lines of the magnetic field may be constant without changing.

In some implementations, in the magnet plate in FIG. 5, a first vertical unit magnet 1, a second horizontal unit magnet 4, a second vertical unit magnet 3 and a first horizontal unit magnet 2 may be arranged such that the direction of the magnetic force line in the Y-axis direction changes clockwise by 90 degrees, and as this pattern is repeated multiple times, the magnetic force may repeatedly increase and decrease in the Y-axis direction.

The increase and decrease of the magnetic force in the Y-axis direction may have a certain periodicity. For example, the magnetic force depending on the position in the Y-axis direction may form a sine wave. In some implementations, the periodicity of the magnetic force may change depending on the length (LY) of the unit magnets in the Y-axis direction.

The magnet plates are disposed on both the upper and lower sides, respectively, and the unit magnets are arranged so that magnets with opposite polarities face each other. Thus, there is no change in the direction of the magnetic force lines, as described previously.

In the apparatus for manufacturing a negative electrode based on an embodiment, as described above, a constant magnetic field is applied in the X-axis direction, which is the traveling direction of the negative electrode, without change in the direction of magnetic force and magnetic force lines. Thus, the negative electrode active material may be oriented in a direction perpendicular to the negative electrode current collector, thereby improving the movement path of lithium ions.

On the other hand, as the negative active material is oriented by the action of the magnetic field as described above, the curl of the electrode may be generated in a location in which the magnetic force is large, such as the center of the vertical unit magnet, but the generation of the curl may be suppressed by the portion in which the magnetic force is small. Therefore, the phenomenon of the negative electrode mixture layer being peeled off from the negative electrode current collector during the high-rate charging process of the battery may be suppressed.

FIG. 6 illustrates a schematic example of an apparatus for manufacturing a negative electrode, in which a magnetic plate with vertical and horizontal unit magnets are arranged. In one example, the direction of the magnetic force lines changes by 90 degrees in the X-axis direction, which is the traveling direction of the negative electrode, and there is no change in the magnetic force of the magnetic field and direction of magnetic force lines in the Y-axis direction. A magnetic plate is disposed on one of the upper and lower sides of the negative electrode traveling surface, and a magnet plate on which magnets of the magnet plate and magnets of opposite polarity face each other is disposed on the other side.

As illustrated in FIG. 6, when a magnetic field in which the magnetic force of the magnetic field changes periodically in the X-axis direction, which is the traveling direction of the negative electrode, is applied, the degree of orientation may be maximized by orienting the negative electrode active material in a direction perpendicular to the negative electrode current collector, but during the high-rate charging process of the cell, the negative electrode mixture layer may peel off from the negative electrode current collector.

Accordingly, as described above, in some embodiments of the disclosed technology, a magnet plate may be configured by disposing the unit magnets such that there is no change in the magnetic field in the traveling direction (e.g., X-axis direction) of the negative electrode and the direction of the magnetic force lines changes by 90 degrees in the width direction (Y-axis direction) of the negative electrode traveling direction, thereby obtaining a negative electrode in which the orientation of the negative electrode active material is improved and the peeling problem of the negative electrode is suppressed.

In some embodiments of the disclosed technology, a plurality of unit magnets are arranged so that the magnetic force line direction changes by 90 degrees in a constant direction in the Y-axis direction, while in the X-axis direction, which is the traveling direction of the negative electrode, there may be a unit magnet row parallel to the X-axis. The unit magnet row is one or two or more unit magnets of the same type arranged parallel to the X-axis, and the unit magnet row may include two or more.

For example, as illustrated in FIG. 5, a first vertical unit magnet row in which at least one first vertical unit magnet (1) is arranged in a line, a first horizontal unit magnet row in which at least one first horizontal unit magnet (2) is arranged in a line, a second vertical unit magnet row in which at least one second vertical unit magnet (3) is arranged in a line, and a second horizontal unit magnet row in which at least one second horizontal unit magnet (4) is arranged in a line are sequentially arranged parallel to the X axis, and additionally, this arrangement pattern may be repeated to form a magnet plate.

The unit magnets of the same type may be referred to as unit magnets whose magnetic force lines have the same direction. FIG. 5 schematically illustrates an example of forming one unit magnet row in the X-axis direction using one unit magnet, and in this case, a length (LX) of the unit magnet in the X-axis direction is the same as the length of the unit magnet row.

When two or more unit magnets of the same type are used to form one unit magnet row in the X-axis direction, the unit magnets of the same type may have the same cross-section in the direction perpendicular to the X-axis direction. Although not illustrated, for example, unit magnets forming one unit magnet row may have the same length (LY) and thickness (D) in the Y-axis direction.

Two or more unit magnets forming one unit magnet row may have the same or different lengths (LX) in the X-axis direction. For example, one unit magnet row in the X-axis direction may be formed by combining two or more unit magnets of the same size, and may be formed using two or more unit magnets with different lengths (LX) in the X-axis direction.

Furthermore, as illustrated in FIG. 5, the plurality of unit magnet rows may have the same length or different lengths, and some unit magnet rows may be the same. Furthermore, the lengths (LX) of the unit magnets used to form different unit magnet rows in the X-axis direction may be the same or different from each other.

As described above, in the magnet plate based on some embodiments of the disclosed technology, respective unit magnets are disposed such that the direction of the magnetic force line rotates by 90° in a constant direction along the Y-axis, and in addition, as first and second magnet plates are respectively disposed so that unit magnets of opposite polarity face each other on both upper and lower sides of the X-Y plane along which the negative electrode extends, the horizontal magnetic force lines are removed, and a magnetic field in which the magnetic force changes periodically in the Y-axis direction may be applied.

Unit magnets disposed so that the direction of the magnetic force line changes by 90 degrees in the Y-axis direction are formed by alternating disposing first and second vertical unit magnets 1 and 3 forming lines of magnetic force in the vertical direction, and first and second horizontal unit magnets 2 and 4, which form magnetic force lines in the left and right horizontal directions.

In some implementations, as illustrated in FIG. 7, the magnetic force provided by the first and second vertical unit magnets 1 and 3 is greater than the magnetic force provided by the first and second horizontal unit magnets 2 and 4, has a maximum magnetic force at the center position of the first and second vertical unit magnets 1 and3, and has a minimum magnetic force at the center of the first and second horizontal unit magnets 2 and 4, and this change in magnetic force has a constant cycle in the Y-axis direction.

The characteristics of magnetic force change with such periodicity may vary depending on the length ratio of the unit magnet. In some implementations, the larger the area of the first and second vertical unit magnets 1 and 3 facing the negative electrode traveling surface, the larger the area that provides a magnetic field with greater magnetic force, which may contribute more to improving the orientation of the negative electrode. In addition, as the area of the first and second horizontal unit magnets 2 and 4 decreases, the area providing a magnetic field with small magnetic force decreases, thereby increasing the ratio of highly oriented areas, and this may improve fast charging performance. However, the tendency for negative electrode peeling due to volume expansion of the electrode during charging may increase.

In some embodiments of the disclosed technology, the length of the horizontal and vertical unit magnets may be controlled to improve the orientation of the negative electrode and the effect of preventing peeling. For example, the first and second vertical unit magnets 1 and 3 with large magnetic force may contribute more to improving the orientation of the negative electrode, and the first and second horizontal unit magnets 2 and 4 may contribute to preventing peeling of the negative electrode.

In some implementations, in an embodiment of the disclosed technology, the length of the first and second vertical unit magnets 1 and 3 in the Y-axis direction and the length of the first and second horizontal unit magnets 2 and 4 in the Y-axis direction may be appropriately controlled, thereby improving the orientation of the negative electrode and further improving the effect of preventing peeling.

Although not particularly limited, the length of the first and second vertical unit magnets 1 and 3 in the Y-axis direction is referred to as LY1, and the length of the first and second horizontal unit magnets 2 and 4 in the Y-axis direction is referred to as LY2, the length ratio of LY1 and LY2, LY2/LY1, may be adjusted to have a value greater than 0.5 but less than 2.67, thereby improving the orientation of the negative electrode and also preventing the peeling problem.

In a case in which LY2/LY1 is 0.5 or less, the period of magnetic force change in the Y-axis direction becomes shorter, and as a result, interfacial stress is formed at the interface between the negative electrode mixture layer and the negative electrode current collector, and thus it may be difficult to suppress the phenomenon of the electrode mixture layer being peeled off from the negative electrode current collector. On the other hand, if LY2/LY1 is 2.67 or more, the area with maximum magnetic force decreases, and as a result, the required level of negative electrode orientation cannot be obtained, which may reduce the effect of improving charge and discharge efficiency.

The length LX1 of the first and second vertical unit magnets 1 and 3 in the X-axis direction and the length LX2 of the first and second horizontal unit magnets 2 and 4 in the X-axis direction may be the same as each other or different from each other, and there is no particular limitation.

In addition, a thickness D1 of the first and second vertical unit magnets 1 and 3 and a thickness D2 of the first and second horizontal unit magnets 2 and4 may be the same or different from each other, and thus, it is not particularly limited. However, the first magnet plate and the second magnet plate may have surfaces facing each other while parallel to each other, based on the X-Y plane along which the negative electrode travels.

As described above, by driving a negative electrode current collector coated with a negative electrode mixture in an apparatus for manufacturing a negative electrode, including a pair of magnet plates having an arrangement of unit magnets based on an embodiment on both sides of the X-Y plane, respectively, along which the negative electrode travels, the negative electrode active material in the negative electrode mixture layer may be oriented, and therefore, rapid charging performance may be improved by shortening the movement path of lithium ions.

The negative electrode may be manufactured by applying a negative electrode mixture containing a negative electrode active material to one or both sides of a negative electrode current collector and by driving the negative electrode current collector coated with the negative electrode mixture between a pair of magnet plates as described above while a magnetic field is applied.

In general, a negative electrode having a negative electrode mixture layer formed on a negative electrode current collector may be manufactured by applying a negative electrode mixture in the form of a slurry containing a negative electrode active material to at least one surface of a negative electrode current collector, drying the same, and then rolling the same.

In some implementations, as described above, when a magnetic field whose magnetic force changes in the Y-axis direction is applied from both the upper and lower sides of the X-Y plane, in the X-Y plane on which the negative electrode travels in the X-axis direction, the negative electrode active material may be oriented in a direction perpendicular to the negative electrode current collector by applying the negative electrode mixture slurry on the negative electrode current collector and drying the same. In addition, during the drying process after applying the negative electrode mixture to the negative electrode current collector, a magnetic field may be applied to orient the negative electrode active material in the negative electrode mixture layer, and the negative electrode mixture slurry is applied to the negative electrode current collector, and then, a magnetic field may be applied to orient the negative electrode active material in the negative electrode mixture layer and then dried.

The magnetic field based on some embodiments of the disclosed technology may have a maximum magnetic force of 4,000G or more, for example, 4,500G or more, 5,000G or more, 5,500G or more, 6,000G or more, 6,500G or more, or 7,000G or more, and may be 8, 000G or more. Meanwhile, the greater the maximum magnetic force, the better the degree of orientation of the negative electrode active material in the negative electrode mixture layer, and it is not particularly limited, but the maximum magnetic force may be 12,000 G or less, for example, 10,000 G or less.

Additionally, the magnetic field may be applied to the negative electrode mixture layer for 1 second or longer, for example, 1.5 seconds or longer, 2 seconds or longer, 3 seconds or longer, or 4 seconds or longer, and may be applied to the negative electrode mixture layer for 30 seconds or less, for example, 25 seconds or less, 20 seconds or less, 15 seconds or less, or 10 seconds or less.

As another example, the negative electrode current collector coated with the negative electrode mixture slurry may be driven, but not limited thereto, at a speed of, for example, 0.1 m/min to 50 m/min. The slower the traveling speed of the negative electrode current collector, the longer the negative electrode mixture stays in the magnetic field, and thus, the orientation of the negative electrode active material may be improved.

The viscosity of the negative electrode mixture in the slurry phase may affect the orientation of the negative electrode active material by the application of a magnetic field. For example, the lower the viscosity of the negative electrode mixture, the lower the resistance to the flow of the negative electrode mixture even if the magnetic force and magnetic field application time are the same, and accordingly, it is easier to orient the negative electrode active material in the vertical direction with respect to the negative electrode current collector.

As an embodiment, the negative electrode mixture slurry may have a viscosity of 300,000 cp or less when measured at 25°C and a shear rate of 0.1 s⁻¹. The viscosity of the negative electrode mixture slurry may be, for example, 150,000 cp or less, 130,000 cp or less, 100,000 cp or less, 75,000 cp or less, 50,000 cp or less, 35,000 cp or less, 30,000 cp or less, 27,500 cp or less, or 25,000 cp or less.

On the other hand, the lower limit of the viscosity of the negative electrode mixture slurry is not particularly limited, but may be 5,000 cp (25°C, shear rate of 0.1 s⁻¹) or more. If the viscosity of the negative electrode mixture slurry is too low, the negative electrode active material in the negative electrode mixture slurry may easily precipitate.

The drying process is a process for removing a solvent contained in the negative electrode mixture. In some implementations, the drying means is not particularly limited, and thus, related art drying means may be applied. For example, various drying methods such as natural drying, heat drying, reduced pressure drying, and blowing drying may be used, and may be performed in several operations.

The drying process is not particularly limited, but may be performed at a temperature of, for example, 60 to 180°C, in some implementations, in a range of 70 to 150°C, for 20 to 300 seconds, for example, 40 to 240 seconds, or 60 to 200 seconds.

A rolling process may be performed after the drying process, and the thickness or density of the negative electrode mixture layer may be adjusted by the rolling process. The rolling process may be performed by a general method such as a roll press method, a flat press method or the like, and by the above rolling process, the negative electrode mixture layer may be manufactured to a thickness of 20 µm or more and 120 µm or less per side, for example, 40 µm or more and 100 µm or less per side, or 60µm or more and 80µm or less per side.

The negative electrode obtained by the rolling may be a high-density electrode in which the density of the negative electrode mixture layer is 1.5 g/cm³ or more. For example, the density of the negative electrode mixture layer may be 1.5 g/cm³ or more and 2.2 g/cm³ or less, or 1.5 g/cm³ or more and 2.0 g/cm³ or less. When the density of the negative electrode mixture layer satisfies the above range, output, lifespan, and high-temperature storage characteristics may be improved during battery manufacturing.

The negative electrode obtained based on some embodiments of the disclosed technology is a negative electrode obtained by applying a constant magnetic force in the traveling direction (e.g., X-axis direction) of the negative electrode and applying a periodically changing magnetic force in the width direction (e.g., Y-axis direction) during the negative electrode manufacturing process, and in the negative electrode with an X-Y plane, in one direction, sections with high and low vertical orientation are alternately formed in respective sections, and in the other direction, a negative electrode with a constant degree of vertical orientation is obtained. Therefore, a negative electrode may be obtained in which the negative electrode mixture layer of the negative electrode has different orientations of the negative electrode active material in the X-axis direction and the Y-axis direction, the orientation of the negative electrode active material in either the X-axis direction or the Y-axis direction is constant, and the degree of orientation of the negative electrode active material in the other direction changes periodically.

In the negative electrode as described above, a maximum value of the black-and-white degree may be 63 or more, for example, 63.18 to 63.42, but is not limited thereto.

On the other hand, the negative electrode based on an embodiment may have a minimum value of PO of 0.37 or less, in some implementations, a value of 0.29 to 0.37.

In some embodiments of the disclosed technology, the negative electrode mixture layer may be formed by applying a negative electrode mixture slurry containing a negative electrode active material, a conductive material, a binder, and a solvent onto a negative electrode current collector. Additionally, the negative electrode mixture layer may further include additives such as thickeners or the like, if necessary.

The negative electrode active material may be a carbon-based negative electrode active material. The carbon-based negative electrode active material may be suitably used based on some embodiments of the disclosed technology as long as it is commonly used in the production of negative electrodes of secondary batteries. This carbon-based negative electrode active material is not particularly limited, but may be artificial graphite, natural graphite, or a mixture of artificial graphite and natural graphite, or may be artificial graphite. Artificial graphite may further improve the dispersibility of the slurry and improve lifespan and high-temperature storage characteristics thereof.

Crystalline carbon-based active materials such as artificial graphite or a mixture of artificial graphite and natural graphite have more developed particle crystallographic characteristics as compared with amorphous carbon-based active materials. Therefore, when such a crystalline carbon-based active material is used as a negative electrode active material, the orientation characteristics of the carbon material in the negative electrode mixture layer with respect to the external magnetic field may be further improved, and further, the orientation of the pores may be improved.

The form of the artificial graphite or natural graphite may be amorphous, plate-shaped, flake-shaped, spherical, fibrous, or combinations thereof. In addition, when the artificial graphite and natural graphite are mixed and used, the mixing ratio may be 70:30 to 95:5 in weight ratio.

The negative electrode active material may be used without particular limitation as long as it has a shape capable of inserting and desorbing lithium ions, but in terms of improving the function of the negative electrode active material for lithium secondary batteries, the aspect ratio may typically be 20 or more. When applying a magnetic field while using a negative electrode active material having the above aspect ratio, the (002) plane of the negative electrode active material particles may be oriented in a direction perpendicular to the surface of the negative electrode current collector.

In addition, the negative electrode active material may further include at least one of a silicon (Si)-based negative electrode active material, a tin (Sn)-based negative electrode active material, or a lithium vanadium oxide negative electrode active material, along with the carbon-based negative electrode active material. In the case in which the negative electrode active material further includes these as described above, it may be included in the range of 1 to 50% by weight based on the total weight of the negative electrode active material.

The Si-based negative electrode active material may be Si, Si-C composite, SiOₓ (0<x<2), or an Si-Q alloy. In the Si-Q alloy, Q may be an element selected from the group consisting of alkali metals, alkaline earth metals, Group 13 elements, Group 14 elements, Group 15 elements, Group 16 elements, transition metals, rare earth elements, and combinations thereof, in addition to Si, and in some implementations, may be selected from a group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and combinations thereof.

In general, as a negative electrode active material, Si-based negative electrode active materials are known to have characteristics of large volume changes. Accordingly, generally, a silicon-based negative electrode active material may be added along with a carbon-based negative electrode active material such as graphite. In this case, carbon nanotubes may be included as a conductive material to prevent swelling due to volume expansion of the silicon-based negative electrode active material.

The Sn-based negative electrode active material may be Sn, SnO₂, or Sn-R alloy. In the Sn-R alloy, R may be an element selected from the group consisting of alkali metals, alkaline earth metals, Group 13 elements, Group 14 elements, Group 15 elements, Group 16 elements, transition metals, rare earth elements, and combinations thereof, in addition to Sn and Si, and in some implementations, may be selected from a group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, In, Tl, Ge, P, As, Sb, Bi, S, Se, Te, Po, and combinations thereof, and additionally, at least one thereof is mixed with SiO₂ and may be used.

The content of the negative electrode active material in the negative electrode mixture layer may be 94 to 98% by weight based on the total weight of the negative electrode mixture layer.

The conductive material is used to provide conductivity to the electrode, and may be used without limitation as long as it is commonly used in secondary batteries. For example, as the conductive material, carbon-based materials such as natural graphite, artificial graphite, carbon black, acetylene black, Ketjen black, carbon fiber, and carbon nanotubes; metallic substances such as metal powder particles such as copper, nickel, aluminum, and silver, or metal fibers; conductive polymers such as polyphenylene derivatives; or a conductive material including mixtures thereof may be used.

The content of the conductive material may be 0.1 to 3% by weight based on the total weight of the negative electrode mixture layer.

The negative electrode mixture layer may include a binder. The binder binds the negative electrode active material particles to each other and also binds the negative electrode active material to the negative electrode current collector. The binder may be an aqueous binder having water dispersibility, but is not limited thereto.

The water-based binder may be styrene-butadiene rubber (SBR), acrylated styrene-butadiene rubber, acrylonitrile-butadiene rubber, acrylic rubber, butyl rubber, ethylene-propylene copolymer, polyepichlorohydrin, polyphosphazene, polyacrylonitrile., polystyrene, ethylene-propylene-diene copolymer, polyvinylpyridine, chlorosulfonated polyethylene, latex, polyester resin, acrylic resin, phenol resin, epoxy resin, polyvinyl alcohol resin, acrylate resin, or combinations thereof.

The content of the binder may be 1.5 to 3% by weight based on the total weight of the negative electrode mixture layer.

The negative electrode mixture layer may further include a thickener to provide viscosity along with the binder. The thickener may be a water-soluble compound and may be a cellulose-based compound. For example, carboxymethylcellulose, hydroxypropylmethylcellulose, methylcellulose, or alkali metal salts thereof may be used in combination with one or more types. Na, K, or Li may be used as the alkali metal. The thickener may be used in an amount of 0.1 to 3 parts by weight based on 100 parts by weight of the negative electrode active material.

The solvent may be an aqueous solvent such as water.

In some embodiments of the disclosed technology, the negative electrode current collector may include at least one selected from the group consisting of copper foil, nickel foil, stainless steel foil, titanium foil, nickel foam, copper foam, a polymer substrate coated with a conductive metal, and combinations thereof. The thickness of the negative electrode current collector is not particularly limited, and may be, for example, 5 to 30 µm.

In the negative electrode provided by an embodiment of the disclosed technology, the negative electrode active material in the negative electrode mixture layer is oriented in a vertical direction with respect to the negative electrode current collector, thereby facilitating diffusion of lithium ions into the electrode, improving charge and discharge efficiency at high C-rates, and thus improving fast charging performance to improve battery performance.

A secondary battery may be manufactured using a negative electrode in which the negative electrode active material described above is oriented in the vertical direction to the negative electrode current collector. An example of a secondary battery is schematically shown in FIG. 8. As shown in Figure 8, the secondary battery 100 in some implementations may be manufactured by manufacturing an electrode assembly 120 by alternately stacking a positive electrode 121 and the above-mentioned negative electrode 122 with a separator 123 as a boundary, then inserting the same into the battery case 110 and sealing, and injecting an electrolyte solution.

Hereinafter, the positive electrode will be described in some implementations. The positive electrode is not particularly limited, but a positive electrode mixture layer is formed by applying a positive electrode mixture in a slurry phase to at least one surface of a positive electrode current collector, drying and rolling, and any positive electrode commonly used in secondary batteries may be suitably used based on some embodiments of the disclosed technology.

The positive electrode mixture includes a positive electrode active material, a binder, and a solvent, and may include a conductive material and a thickener as needed.

As the positive electrode active material, a compound (lithiated intercalation compound) capable of reversible insertion and desorption of lithium may be used. In some implementations, one or more types of complex oxides of lithium and a metal selected from cobalt, manganese, nickel, and combinations thereof may be used.

A more detailed example is represented by the general formula LiMO₂, which may be lithium transition metal compounds (oxides) with a layered structure, where M includes at least one type of transition metal elements such as Ni, Co, Mn, and the like, and may additionally contain other metallic elements or non-metallic elements. Examples of the complex oxide include a monolithic lithium transition metal complex oxide containing one type of the transition metal element, a so-called binary lithium transition metal complex oxide containing two types of the transition metal element, and NCM or NCA ternary lithium transition metal complex oxides containing, as a constituent element, Ni, Co and Mn as a transition metal element. In some implementations, the complex oxide may be LiₓMn_{1-y}M_{y}A₂, LiₓMn_{1-y}M_{y}O_{2-z}X_{z}, LiₓMn₂O_{4-z}X_{z}, LiₓMn_{2-y}M_{y}M'_{z}A₄, LiₓCo_{1-y}M_{y}A₂, LiₓCo_{1-y}M_{y}O_{2-z}X_{z}, LiₓNi_{1-y}M_{y}A₂, LiₓNi_{1-y}M_{y}O_{2-z}X_{z}, LiₓNi_{1-y}Co_{y}O_{2-z}X_{z}, LiₓNi_{1-y-z}Co_{y}M_{z}A_{α}, LiₓNi_{1-y-z}Co_{y}M_{z}O_{2-α}X_{α}, LiₓNi_{1-y-z}Mn_{y}M_{z}A_{α}, or LiₓNi_{1-y-z}Mn_{y}M_{z}O_{2-α}X. In these respective formulas, 0.9≤x≤1.1, 0≤y≤0.5, and 0≤z≤0.5, 0≤α≤2 are satisfied, M and M' are the same or different, and are selected from the group consisting of Mg, Al, Co, K, Na, Ca, Si, Ti, Sn, V, Ge, Ga, B, As, Zr, Mn, Cr, Fe, Sr, V and rare earth elements, A is selected from the group consisting of O, F, S and P, and X is selected from the group consisting of F, S and P. For example, the complex oxide may be a ternary lithium transition metal complex oxide such as Li(Ni_{1/3}Co_{1/3}Mn_{1/3})O₂.

Additionally, a lithium transition metal compound (oxide) represented by the general formula Li₂MO₃, where M includes at least one type of transition metal element including Mn, Fe and Co, and may further include another metal element or non-metal element, for example, Li₂MnO₃, Li₂PtO₃.

Additionally, the positive electrode active material may be a solid solution of LiMO₂ and Li₂MO₃, for example, a solid solution expressed as 0.5LiNiMnCoO₂-0.5Li₂MnO₃.

Furthermore, the positive active material having a coating layer on the surface may be used, or a mixture of the above compound and a compound having a coating layer may be used. The coating layer may include at least one coating element compound selected from the group consisting of oxides, hydroxides, oxyhydroxides, oxycarbonates, and hydroxycarbonates of the coating elements. The compounds that make up these coating layers may be amorphous or crystalline. Coating elements included in the coating layer may include Mg, Al, Co, K, Na, Ca, Si, Ti, V, Sn, Ge, Ga, B, As, Zr, or mixtures thereof.

In the positive electrode, the positive electrode active material may be 90 to 98% by weight based on the solid weight of the positive electrode mixture.

The binder binds the positive electrode active material particles to each other and also binds the positive electrode active material to the positive electrode current collector, and the binder content may be 1.5 to 5% by weight based on the solid weight of the positive electrode mixture. The binder may be, for example, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, acrylated styrene-butadiene rubber, epoxy resin, nylon, or the like.

In addition to the binder, the positive electrode mixture slurry may also include a thickener to provide viscosity. The thickener may be used with the same thickener included in the negative electrode mixture, and may be included in an amount of 0.1 parts by weight to 3 parts by weight based on 100 parts by weight of the positive electrode active material.

The conductive material is used to provide conductivity to the positive electrode, and any electronically conductive material commonly used in the positive electrode of a secondary battery may be suitably used, and the conductive material used in the negative electrode mixture may be used. The conductive material may be used in an amount of 0.1 to 5% by weight based on the solid weight of the positive electrode mixture.

The solvent may be an aqueous solvent such as water or a non-aqueous solvent. As the non-aqueous solvent, any solvent commonly used in the production of positive electrode mixtures for secondary batteries may be used based on some embodiments of the disclosed technology, and for example, the non-aqueous solvent may be, but is not limited to, N-methyl-2-pyrrolidone (NMP).

The positive electrode current collector may be a metal with good conductivity, for example, aluminum, nickel, titanium, stainless steel, or the like, and may be in various forms such as sheet-type, film-type, mesh-type, and the like. The thickness of the positive electrode current collector is not particularly limited and may be, for example, 5 to 30 µm.

As described above, a positive electrode having a positive electrode mixture layer formed on the positive electrode current collector may be manufactured by applying the positive electrode mixture to at least one side of the positive electrode current collector, drying, and rolling.

The drying and rolling process may be performed by the same method as the production of the negative electrode, and detailed description is omitted.

The separator interposed between the positive electrode and the negative electrode is a porous sheet, non-woven fabric, or the like, and may be a multilayer film of polyethylene, polypropylene, polyvinylidene fluoride, or two or more layers thereof, a mixed multilayer film of two layers of polyethylene/polypropylene, a mixed multilayer film of three layers of polyethylene/polypropylene/polyethylene, a mixed multilayer film of three layers of polypropylene/polyethylene/polypropylene, or the like. Furthermore, the separator may be the porous sheet, non-woven fabric, or the like, with a porous heat-resistant layer formed on one or both sides. The separator is not particularly limited, but for example, may have a thickness of about 10 to 40 um.

The electrolyte solution may include a non-aqueous organic solvent and a lithium salt. The non-aqueous organic solvent serves as a medium through which ions involved in the electrochemical reaction of the battery may move, and may be, for example, carbonate-based, ester-based, ether-based, ketone-based, alcohol-based, or aprotic solvent, and may use those commonly used in lithium ion secondary batteries. The organic solvent may be used alone or in a mixture of two or more solvents. In some implementations, propylene carbonate (PC), ethylene carbonate (EC), diethyl carbonate (DEC), dimethyl carbonate (DMC), ethylmethyl carbonate (EMC), methylpropyl carbonate, dipropyl carbonate, fluoroethylene carbonate (FEC), dimethylsulfuroxide, acetonitrile, dimethoxyethane, diethoxyethane, vinylene carbonate, sulfolane, gamma-butyrolactone, propylene sulfite and tetrahydrofuran, or the like may be used.

The lithium salt is dissolved in an organic solvent and serves as a source of lithium ions in the battery, enabling the operation of a basic lithium ion secondary battery and promoting the movement of lithium ions between the positive and negative electrodes . Lithium salts may be those commonly used in electrolytes for lithium secondary batteries without limitation, and may be expressed as Li⁺X⁻. The anion of this lithium salt is not particularly limited, but as an example, may be F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and the like.

In some implementations, one or two or more types selected from the group consisting of LiPF₆, LiBF₄, LiSbF₆, LiAsF₆, LiN (SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are each independently integers from 1 to 20), LiCl, LiI and LiB(C₂O₄)₂(lithium bis(oxalato) borate: LiBOB) may be used.

The concentration of the lithium salt is not particularly limited, but may be used within the range of 0.1M to 2.0M. The electrolyte solution may further include a vinylene carbonate or ethylene carbonate-based compound as needed to improve battery life.

In the negative electrode based on an embodiment of the disclosed technology, the negative electrode active material in the negative electrode mixture layer is oriented perpendicularly to the negative electrode current collector, such that lithium ions may easily diffuse into the electrode during the charging and discharging process of the secondary battery, thereby lowering the resistance of the battery and improving charge/discharge efficiency, in some implementations, at high C-rates, to improve cycle life characteristics and rapid charge performance. In another embodiment, peeling between the negative electrode current collector and the negative electrode mixture layer may be prevented during a high C-rate charge/discharge process.

In another embodiment, a lithium secondary battery is provided in which the above-described negative electrodes and positive electrodes are alternately stacked with a separator as a boundary. The lithium secondary battery of the disclosed technology may be manufactured by manufacturing an electrode assembly with a separator interposed between the positive electrode and the negative electrode based on some embodiments of the disclosed technology, then storing the same in a battery case, and injecting an electrolyte solution thereinto. The external shape of the lithium secondary battery of the disclosed technology is not particularly limited, but may be a pouch-type battery, a prismatic or cylindrical battery using a can, or a coin-type battery.

### Example

Hereinafter, the disclosed technology will be described in some implementations through examples. The following examples are detailed examples of the disclosed technology and are not intended to limit the disclosed technology.

### Comparative Example 1

Artificial graphite, styrene butadiene rubber (SBR) and carboxymethyl cellulose (CMC) were mixed at a mass ratio of 97.8:1.2:1.0 and then dispersed in deionized distilled water to prepare a slurry form of the negative electrode mixture.

The negative electrode mixture in the slurry phase was coated with a width of 150 mm on copper foil using a slot die so that the loading weight was 12.5 mg/cm².

A negative electrode was manufactured by drying the negative electrode mixture by passing the copper foil coated with the negative electrode mixture through a drying device.

### Comparative Example 2

With neodymium (Nd) magnets, vertical unit magnets with a horizontal and vertical length of 50 mm and a thickness (T) of 20 mm were arranged in the same form as illustrated in FIG. 1 to produce a lower magnet plate with a size of 250 mm × 250 mm.

Additionally, the upper magnet plate was manufactured in the same manner as the production of the lower magnet plate.

In some implementations, the lower magnet plate and the upper magnet plate were disposed so that the polarities of the surfaces facing each other were opposite to each other, and the spacing between the lower magnet plate and the upper magnet plate was 40 mm to produce a magnet module as illustrated in FIG. 1.

The magnetic module was installed right before the drying device and was designed so that the drying process proceeds immediately after the orientation of the negative electrode active material.

After using the same negative electrode mixture as in Comparative Example 1 and coating the same on copper foil in the same manner, the copper foil was passed through the magnet module under an applied magnetic field and the negative electrode mixture was dried while being magnetically oriented for 2 seconds to prepare a negative electrode.

### Comparative Example 3

With neodymium magnets, first and second vertical unit magnets each having a horizontal and vertical length of 40 mm and a thickness of 20 mm and having magnetic force lines upward and downward, and first and second horizontal unit magnets each having a horizontal and vertical length of 40 mm and a thickness of 20 mm and having magnetic force lines oriented to the right and left, were used respectively.

As illustrated in FIG. 6, the first and second vertical unit magnets and the first and second horizontal unit magnets were arranged so that the direction of the magnetic field lines rotated by 90 degrees in the X-axis direction along which the negative electrode extends.

As a result, a lower magnet plate with an overall size of 240 mm × 240 mm was produced.

Additionally, the upper magnet plate was manufactured in the same manner as the lower magnet plate. In some implementations, the lower magnet plate and the upper magnet plate were disposed so that the polarities of the surfaces facing each other were opposite to each other.

A magnetic module was manufactured with a gap of 40 mm between the lower magnet plate and the upper magnet plate.

The magnet module was installed right before the drying device and was designed so that the drying process proceeds immediately after the orientation of the negative electrode active material.

In the same manner as in Comparative Example 2, a negative electrode was manufactured by passing the magnet module for 2 seconds to obtain magnetic orientation and then by drying the negative electrode mixture.

### Example 1

With neodymium magnets, a first vertical unit magnet with magnetic force lines facing upward and a second vertical unit magnet with magnetic force lines facing downward, in which the length (LY1) in the Y-axis direction and the length (LX1) in the X-axis direction are each 40 mm, and the thickness length (D1) is 20 mm, and a first horizontal unit magnet with magnetic force lines directed to the left and a second horizontal unit magnet with magnetic force lines directed to the right, in which the length (LY2) in the Y-axis direction and the length (LX2) in the X-axis direction are each 40 mm and the thickness length (D2) is 20 mm, were used respectively.

In some implementations, as illustrated in FIG. 5, the first vertical unit magnet 1, the second horizontal unit magnet 4, the second vertical unit magnet 3 and the first horizontal unit magnet 2 were arranged in order, such that the direction of the magnetic field lines rotates 90 degrees in the Y-axis direction with respect to the X-Y plane in which the negative electrode extends in the X-axis direction, and this arrangement pattern was repeated to produce a magnet plate with a total size of 240 mm × 240 mm.

The magnet plate prepared above was used as the lower magnet plate.

On the other hand, the upper magnet plate was manufactured in the same manner as the lower magnet plate, and the magnetic module was manufactured with a gap of 40 mm between the lower magnet plate and the upper magnet plate. In some implementations, the lower magnet plate and the upper magnet plate were disposed so that the polarities of the surfaces facing each other were opposite to each other.

The magnet module was installed right before the drying device and was designed so that the drying process proceeds immediately after the orientation of the negative electrode active material.

Artificial graphite, styrene butadiene rubber (SBR), and carboxymethyl cellulose (CMC) were mixed at a mass ratio of 97.8:1.2:1.0 and then dispersed in deionized distilled water to prepare a slurry form of the negative electrode mixture.

The prepared negative electrode mixture slurry was coated with a width of 150 mm on copper foil using a slot die so that the loading weight was 12.5 mg/cm².

The copper foil was magnetically oriented by passing the magnet module for 2 seconds under a magnetic field, and the negative electrode mixture was dried to prepare negative electrodes.

### Physical Property Evaluation

### [Maximum Magnetic Force]

For respective magnet modules used in Comparative Examples 2 and 3 and Example 1, the maximum magnetic force was measured on the traveling surface on which the negative electrode travels between the lower magnet plate and the upper magnet plate, and the results are illustrated in Table 1. In some implementations, the maximum magnetic force was measured at regular intervals of 1 cm in the X-axis direction for one vertical unit magnet row located at the center of the electrode in the width direction (Y-axis direction).

### [Black and White and PO]

For respective negative electrodes manufactured in Comparative Examples 1 to 3 and Example 1, the black and white degree of the coated negative electrode was measured using a black-and-white meter at 10 points at 10 mm intervals in the negative electrode width direction (Y-axis direction), and Preferred Orientation (PO), which indicates the degree of orientation of the negative electrode active material, was measured using XRD. The larger the black-and-white value, the better the vertical orientation of the negative electrode active material, and the smaller the PO value, the better the vertical orientation of the negative electrode active material.

The maximum value of the measured black and white degree and the PO minimum value are illustrated in Table 1.

### [Cell Performance Evaluation]

After manufacturing the cell using the negative electrode and the same positive electrode prepared in Comparative Examples 1 to 3 and Example 1, the cell was charged in Constant Current (CC) mode at 2.5C until the voltage reached 4.2V to obtain a charging capacity, and was discharged in CC mode at 0.3C until the voltage reached 2.5V to obtain a discharged capacity.

The charge/discharge efficiency was calculated by dividing the measured charge capacity by the discharge capacity, and the results are illustrated in Table 1.

In addition, the cell was dismantled while charging in Constant Current (CC) mode at 2.5C until the voltage reached 4.2V to check whether the negative electrode was delaminated, and the results are illustrated in Table 1.

**[Table 1]**

| | Maximum Magnetic Force (G) | Electrode Evaluation Result | | Cell evaluation result | |
|---|---|---|---|---|---|
| | | Maximum Value of Black and White | PO Minimum Value | Electrode Peeling | Charge/disch arge Efficiency (%) |
| Comparat ive Example 1 | - | 59.75 | 0.56 | X | 97.5 |
| Comparat ive Example 2 | 4,200 | 61.88 | 0.51 | X | 97.8 |
| Comparat ive Example 3 | 8,050 | 63.57 | 0.29 | ○ | 99.7 |
| Example 1 | 8, 100 | 63.35 | 0.3 | X | 99.6 |

As can be seen from Table 1, Comparative Examples 2 and 3, and Example 1, in which the negative electrode active material was oriented by applying a magnetic field, had a higher black-and-white value than Comparative Example 1, and also had a low PO value, and thus it can be seen that the negative electrode active material was oriented perpendicular to the negative electrode current collector.

In addition, as can be seen from Table 1, Comparative Example 3 and Example 1, in which a magnet plate having a unit magnet arrangement to change the direction of the magnetic force line by 90 degrees provided based on some embodiments of the disclosed technology, was applied, a magnetic field with significantly higher magnetic force could be applied, compared to Comparative Example 2 using a magnet plate with a general magnet arrangement. As a result, even when a magnetic field is applied for a short period of time, the orientation of the negative electrode active material may be further improved, and due to the high orientation of the negative electrode active material as described above, the charging and discharging efficiency of the negative electrode may be further improved.

On the other hand, except that Comparative Example 3 used a magnet plate disposed so that the direction of the magnetic force line of the unit magnet changes by 90 degrees in the X-axis direction, which is the traveling direction of the negative electrode, while Example 1 used a magnet plate disposed so that the magnetic force line direction of the unit magnets changes by 90 degrees in the Y-axis direction, which is the width direction of the negative electrode traveling direction; the negative electrodes were manufactured in the same manner in Example 1 and Comparative Example 3. In the case of the maximum magnetic force provided in Example 1 and Comparative Example 3, about 50G higher value was provided in Example 1, but the black and white degrees and the PO values of the manufactured negative electrodes were similar, and the charge and discharge efficiency in the cells using the manufactured negative electrodes was also equivalent.

On the other hand, as a result of disassembling and analyzing the battery, it was confirmed that in the cell using the negative electrode of Comparative Example 3, the negative electrode mixture layer was peeled off from the negative electrode current collector. This means that when lithium ions do not easily penetrate into the negative electrode during the high-rate charging process, lithium salts precipitate on the surface of the negative electrode, and this causes the charge/discharge efficiency to decrease. Also, in this case, as the vertical orientation of the entire negative electrode increases significantly, the graphite expands in a direction parallel to the current collector during the charging process, and this increases interfacial stress with the current collector to cause peeling to occur.

On the other hand, peeling of the negative electrode mixture layer was not observed from the negative electrode of Example 1, which means that the orientation of the negative electrode active material was improved by the application of a magnetic field in which the magnetic force was constant in the traveling direction of the negative electrode and the magnetic force changed in the width direction of the negative electrode, such that the negative electrode has the characteristic of periodically changing the orientation of the negative electrode active material in a certain direction. Therefore, it can be explained that the volume expansion due to the expansion of the negative electrode active material during the charging and discharging process may be distributed in the direction in which the orientation changes, thereby increasing the charging/discharging efficiency and suppressing the occurrence of negative electrode peeling.

### Examples 2 to 10

As illustrated in Table 2, except that a plurality of vertical unit magnets with a length (LY1) in the Y-axis direction, a length (LX1) in the X-axis direction and a thickness length (D1), and a plurality of horizontal unit magnets with a length (LY2) in the Y-axis direction, a length (LX2) in the X-axis direction and a thickness length (D2) are used, thereby using a magnet plate having a total size of 240 mm × 240 mm, a magnetic module was manufactured in the same manner as Example 1.

**[Table 2]**

| | Vertical Unit Magnet | | | Horizontal Unit Magnet | | | Length Ratio (LY2/LY1) |
|---|---|---|---|---|---|---|---|
| | LY1 | LX1 | D1 | LY2 | LX2 | D2 | |
| Example 2 | 30 | 40 | 20 | 10 | 40 | 20 | 0.33 |
| Example 3 | 30 | 40 | 20 | 20 | 40 | 20 | 0.67 |
| Example 4 | 30 | 40 | 20 | 40 | 40 | 20 | 1.33 |
| Example 5 | 30 | 40 | 20 | 60 | 40 | 20 | 2.00 |
| Example 6 | 30 | 40 | 20 | 80 | 40 | 20 | 2.67 |
| Example 7 | 40 | 40 | 20 | 10 | 40 | 20 | 0.25 |
| Example 8 | 40 | 40 | 20 | 20 | 40 | 20 | 0.50 |
| Example 9 | 40 | 40 | 20 | 60 | 40 | 20 | 1.50 |
| Example 10 | 40 | 40 | 20 | 80 | 40 | 20 | 2.00 |

A negative electrode was manufactured in the same manner as Example 1, using the magnet module manufactured above.

In respective examples, the maximum magnetic force of the magnetic field applied during the negative electrode manufacturing process, the maximum black-and-white value and minimum PO value for the negative electrode manufactured in each example, and the performance of the cell using the negative electrode manufactured in each example, were respectively evaluated with electrode peeling and charge/discharge efficiency in the same manner as in Example 1, and the evaluation results are illustrated in Table 3.

**[Table 3]**

| | | Electrode Evaluation Results | | Actual Evaluation Results | |
|---|---|---|---|---|---|
| | Maximum Magnetic Force (G) | Maximum Black-and-white Degree | PO Minimum Value | Electrode Peeling | Charge/disc harge Efficiency (%) |
| Example 2 | 8,400 | 63.73 | 0.27 | ○ | 99.9 |
| Example 3 | 8,250 | 63.42 | 0.29 | X | 99.8 |
| Example 4 | 8, 100 | 63.33 | 0.32 | X | 99.5 |
| Example 5 | 7,600 | 63.18 | 0.34 | X | 99.1 |
| Example 6 | 6,300 | 62.25 | 0.43 | X | 98.2 |
| Example 7 | 8,350 | 63.66 | 0.26 | ○ | 100.0 |
| Example 8 | 8,250 | 63.51 | 0.27 | ○ | 99.8 |
| Example 9 | 7,750 | 63.27 | 0.33 | X | 99.2 |
| Example 10 | 7,450 | 63.19 | 0.37 | X | 99.0 |

On the other hand, the negative electrodes obtained in Examples 3 to 6 and 9 to 10 were negative electrodes obtained by applying a constant magnetic force in the traveling direction of the negative electrode and applying a periodically changing magnetic force in the width direction, and in the width direction of the negative electrode, sections with high and low vertical orientation were formed alternately for each section. When a section with low vertical orientation is periodically present, it plays a role in mitigating the expansion of graphite in a direction parallel to the current collector, and thus, it was confirmed that peeling properties could be improved.

However, in Examples 2, 7, and 8, the magnetic field was also applied by a magnet plate in which the vertical coherence magnets and the horizontal unit magnets were arranged so that the direction of the magnetic force lines changed by 90 degrees in the horizontal direction (Y-axis direction) of the negative electrode traveling direction, but unlike other examples, the result was that peeling of the electrode occurred.

Comparing Examples 2, 7, and 8 with Examples 3 to 6 and 9 to 10, when the length ratio LY2/LY1 in the Y-axis direction between the vertical unit magnet and the horizontal unit magnet is 0.5 or less, as the period of magnetic force change in the back width direction becomes shorter, and interfacial stress between the negative electrode mixture layer and the current collector is formed, which may cause peeling of the negative electrode mixture layer. On the other hand, in Example 6 in which the length ratio LY2/LY1 was 2.67, the charge/discharge efficiency was relatively low at 98.2%, which resulted in a decrease in the maximum magnetic force, and thus, it was found that this may result in not obtaining the required level (99.0% or more) of charge/discharge efficiency characteristics.

From the results of Examples 1 to 10, it can be seen that when the length ratio LY2/LY1 in the Y-axis direction between the vertical unit magnet and the horizontal unit magnet using the vertical unit magnet and the horizontal unit magnet is greater than 0.5 and less than 2.67, the charging and discharging efficiency of the battery may be improved and electrode peeling may also be more effectively suppressed.

As set forth above, in embodiments, by disposing magnet plates with a magnet array in which a certain magnetic force is applied to a extending direction of a negative electrode during a negative electrode manufacturing process and magnetic force changes in a width direction of the negative electrode above and below the negative electrode traveling surface, a negative electrode in which cell charging performance may be improved while suppressing cell delamination may be manufactured.

In addition, in an embodiment, a negative electrode of which orientation changes by a certain period in a width direction with respect to a traveling direction of the negative electrode may be manufactured, and also, by optimizing a ratio of vertical and horizontal lengths of unit magnets, cell delamination may be suppressed and cell charging performance may be further improved.

The disclosed technology can be implemented in, and to manufacture, various electrochemical devices with positive and negative electrodes, such as rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

Only limited examples of implementations of certain embodiments of the disclosed technology are described. Variations, improvements and enhancements of the disclosed embodiments and other embodiments may be made based on the disclosure of this patent document.

## Claims

1. An apparatus for manufacturing a negative electrode, comprising;
a pair of magnet plates including an upper magnet plate and a lower magnet plate respectively disposed above and below a plane in which the negative electrode moves in a first direction,
wherein each of the pair of magnet plates includes first and second vertical unit magnets and first and second horizontal unit magnets with magnetic force lines having different directions, wherein a direction of the magnetic force lines of the unit magnets changes by 90 degrees in a second direction,
the upper magnet plate and the lower magnet plate include magnets of opposite polarity facing each other, and
the upper magnet plate and the lower magnet plate have constant magnetic force in the first direction and a magnetic force changing in the second direction.

2. The apparatus of claim 1, wherein a length of the vertical unit magnet in the second direction and a length of the horizontal unit magnet in the second direction are identical or different.

3. The apparatus of any one claim of claim 1 to 2, wherein a ratio of a length of the horizontal unit magnet in the second direction to a length of the vertical unit magnet in the second direction is greater than 0.5 and smaller than 2.67.

4. The apparatus of any one claim of claim 1 to 3, wherein a length of the vertical unit magnet in the first direction and a length of the horizontal unit magnet in the first direction are the same as each other or different from each other.

5. The apparatus of any one claim of claim 1 to 4, wherein the magnet plate includes two or more unit magnet rows in which at least one unit magnet is arranged parallel to the first direction, and the unit magnet rows have at least one unit magnet.

6. The apparatus of claim 5, wherein one of the unit magnet rows includes two or more unit magnets, the unit magnets have i) magnetic force lines in the same direction, ii) the same cross-sectional shape, or iii) the same or different lengths in the X-axis direction

7. The apparatus of any one claim of claim 1 to 6, wherein a thickness of the vertical unit magnet and a thickness of the horizontal unit magnet are the same as each other or different from each other.

8. The apparatus of any one claim of claim 1 to 7, wherein the upper magnet plate and the lower magnet plate have surfaces facing each other and being parallel planes.

9. A method of manufacturing a negative electrode, comprising:
applying a negative electrode mixture including a negative electrode active material to at least one surface of a negative electrode current collector; and
performing a magnetic field application operation by applying a magnetic field to operate the negative electrode current collector coated with the negative electrode mixture, between the upper magnet plate and the lower magnet plate under application of the magnetic field,
wherein the magnetic field is applied by the apparatus for manufacturing a negative electrode of claim 1.

10. The method of claim 9, wherein the magnetic field has a constant magnetic force and a magnetic force line direction in the first direction.

11. The method of any one claim of claims 9 to 10, wherein increases and decreases in the magnetic field repeat in the second direction.

12. The method of any one claim of claims 9 to 11, wherein the magnetic field has a sine wave in magnetic force depending on a position in the second direction.

13. A device comprising a negative electrode and a positive electrode that form two electrical terminals of the device, wherein the negative electrode includes:
a negative electrode current collector including a plane and a negative electrode mixture layer including a negative electrode active material on at least one surface of the negative electrode current collector,
wherein, in the negative electrode mixture layer, an orientation of the negative electrode active material in a first direction and an orientation of the negative electrode active material in a second direction are different from each other, and an increase and a decrease in the orientation of the negative electrode active material in the second direction are periodically repeated.

14. The device of claim 13, wherein the negative electrode has a black-and-white degree value of 63.18 to 63.42.

15. The device of any one claim of claims 13 to 14, wherein the negative electrode has a PO value of 0.29 to 0.37.
